# EUROPÄISCHE PATENTSCHRIFT

(11) **EP 1 565 346 B1**
(45) Veröffentlichungstag und Bekanntmachung des Hinweises auf die Patenterteilung: **08.11.2006**
(21) Anmeldenummer: 03775339.9
(22) Anmeldetag: 11.11.2003
(51) Int. Cl.: B60Q 1/14, B60Q 1/04, B60Q 1/20

(54) **BREITBANDIGE BELEUCHTUNGSEINRICHTUNG**
WIDEBAND ILLUMINATION DEVICE
DISPOSITIF D'ECLAIRAGE A LARGE BANDE

(30) Priorität: 25.11.2002 DE 10255015
(43) Veröffentlichungstag der Anmeldung: 24.08.2005
(73) Patentinhaber: DaimlerChrysler AG, 70567 Stuttgart (DE)
(72) Erfinder: GRIESINGER, Manfred, 71229 Leonberg (DE); HARTLIEB, Markus, 72141 Walddorfhäslach (DE); KINCSES, Wilhelm, 73732 Esslingen (DE); LEIS, Hans-Georg, 73733 Esslingen (DE); ROTHE, Sigfried, 73770 Denkendorf (DE)
(86) Internationale Anmeldenummer: PCT/EP2003/012576
(87) Internationale Veröffentlichungsnummer: WO 2004/048149

(56) Entgegenhaltungen:
- EP-A- 1 270 325
- EP-A- 1 298 481
- WO-A-00/15462
- DE-A- 19 737 550
- DE-U- 20 115 799
- DE-U- 29 806 638
- FR-A- 2 730 035
- GB-A- 2 131 642
- US-A1- 2001 019 486
- US-B1- 6 406 172

## Beschreibung

Die Erfindung betrifft ein System bestehend aus einer breitbandige Beleuchtungseinrichtung sowie einen Kommunikationssystem und/oder einem System zur Abstandsmessung, insbesondere zur Verwendung in einem Kraftfahrzeug, und ein zum Betrieb eines solchen Systems geeignetes Verfahren nach dem Oberbegriff der Patentansprüche 1 und 12.

Schlechte Sicht bei Nacht ist eine anstrengende und gefährliche Situation, die von vielen Fahrern gefürchtet wird. Als Folge der schlechten Sicht ist die Unfallhäufigkeit nachts deutlich höher als bei Fahrten bei Tag und guter Sicht. Insbesondere treten bei Nacht folgende Schwierigkeiten auf:
- Die Sichtweite mit Abblendlicht bei Gegenverkehr ist gering und wird von vielen Fahrern falsch eingeschätzt. Das führt zu einem späten Erkennen von unbeleuchteten Hindernissen, Fußgängern, Radfahrern ohne Licht und von Tieren und damit zu Unfällen.
- Durch die Scheinwerfer entgegenkommender Fahrzeuge und deren Reflexe vor allem bei nasser Fahrbahn wird der Fahrer geblendet, der Fahrer fährt kurzzeitig in ein schwarzes Loch. Besonders gefährdet sind nachtblinde und ältere Fahrer wegen ihrer geringeren Sehleistung.
- Bei Regen, Nebel und Schneetreiben können die Sichtverhältnisse nochmals deutlich schlechter sein.

Um Verkehrsszenen bei Nacht möglichst gut ausleuchten zu können, gibt es Fahrzeugscheinwerfer, deren Leuchtcharakteristik an den Straßenverlauf angepasst werden kann. Diese Scheinwerfer können motorisch in der Vertikalen gekippt werden, um unterschiedliche Beladungszustände auszugleichen oder Kuppen oder Mulden vor dem Fahrzeug auszuleuchten, beziehungsweise in der Horizontalen geschwenkt werden, um Kurven auszuleuchten. Die dazu nötige Mechanik ist sehr aufwendig und störanfällig, und als Alternative bleibt nur die Möglichkeit, unterschiedliche Typen von Scheinwerfern vorzusehen, zwischen denen umgeschaltet werden kann. Entsprechende Sonderscheinwerfer kann man auch verwenden, um zum Beispiel eine bei Nebel oder Schneefall vorteilhafte breitere und abgesenktere Beleuchtung zu erzeugen. Aus Design- und Kostengründen ist es aber häufig unerwünscht, ein Fahrzeug mit übermäßig vielen Scheinwerfern auszurüsten.

Eine weitere Verbesserung der Sicht bei Nacht wird durch ein opto-elektronisches System erreicht, das in der DE 40 07 646 A1 dargelegt ist. Das System nimmt ein Videobild einer Verkehrsszene auf und stellt es dem Fahrer geeignet dar. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel.

Das System enthält zusätzlich zu den normalen Scheinwerfern zwei Infrarotscheinwerfer, die im nahen Infrarot emittierende Laserdioden als Lichtquelle nutzen. Die Laserdioden werden gepulst betrieben. Eine CCD-Kamera zur Aufnahme des Videobildes ist im Dachbereich des Fahrzeuges untergebracht. Die CCD-Kamera besitzt einen elektronischen Verschluss, der mit den Laserdioden synchronisiert ist. Vor dem Kameraobjektiv ist ein optisches Bandpassfilter angebracht. Das Videobild wird dem Fahrer auf einem LCD-Display gezeigt. Das Verwenden von Laserlicht hat eine Reihe von Vorteilen:

Die Laser emittieren bei einer Wellenlänge von 810 nm im nahen Infrarot. Da das infrarote Licht für das menschliche Auge nahezu nicht sichtbar ist, kann permanent aufgeblendet beleuchtet werden.

Durch Verwenden von Halbleiterlichtquellen kann die Blendung der Kamera durch die sichtbaren Scheinwerfer entgegenkommender Fahrzeuge erheblich reduziert werden. Zum einen weist das Licht von Halbleiterlichtquellen nur eine spektrale Breite von wenigen hm auf, während sichtbare Lichtquellen wie Halogenlampen mehrere hundert nm breit sind. Bringt man ein optisches Filter mit einer schmalen Durchlassbreite vor das Kameraobjektiv, so wird nahezu das gesamte Laserlicht transmittiert, während das Licht, entgegenkommender Fahrzeuge um einen Faktor 50 bis 100 geschwächt wird. Zum Anderen folgen Laserdioden dem Treiberstrom unmittelbar, sie können auf einfache Weise schnell gepulst werden. Verwendet man eine Videokamera mit einem schnellen elektronischen Verschluss, der mit den Lasern synchronisiert ist, so kann das Licht entgegenkommender Fahrzeuge weiter reduziert werden.

In der deutschen Offenlegungsschrift DE 197 37 550 A1 wird eine Signalleuchte beschrieben, welche eine Lampe, einen Lichtstromaufnehmer und eine Abdeckscheibe umfasst. Dabei befindet sich zwischen der Lampe und der Abdeckscheibe eine Lampenabdeckung, deren Aufgabe darin besteht, das Vorhandensein der Lampe zu verdecken und gleichzeitig ein Aussehen aufzuweisen, das dem des Lichtstromaufnehmers bei ausgeschalterer Leuchte ähnlich ist. Um für einen Betrachter der Signalleuchte den Eindruck eines Netzes von kleinen sekundären Lichtquellen entstehen zu lassen, wird vorgeschlagen die Lampenabdeckung so zu gestalten, dass sie in der nähe ihrer Außenseite eine Mehrzahl weiterer sekundärer Lichtquellen erzeugt, bei denen es sich um Bilder der durch den Glühfaden gebildeten Lichtquelle handelt.

Eine im Heckbereich eines Kraftfahrzeuges anzuordnende Kameraüberwachungseinheit, umfassend eine Kamera und eine zusätzliche Leuchtdioden umfassende Beleuchtungseinheit wird im deutschen Gebrauchsmuster DE 298 06 638 U1 beschrieben. Hierbei ist es denkbar, der Kameraeinheit Infrarotdioden zuzuordnen, welche ihr Licht in die selbe Richtung wie die Leuchtdioden abstrahlen.

Das Dokument WO 00/15462 offenbart eine Beleuchtungseinrichtung für Kraftfahrzeuge, mittels welchem die Sicht in den rückwärtigen Fahrzeugbereich verbessert werden soll. Hierzu verfügt die Beleuchtungseinrichtung über Gruppen von Halbleiterlichtquellen Dabei wird jeweils einer Gruppe von Halbleiterlichtquellen gemeinsam eine einzige spezifische Optik vorgeschaltet.

Die nachveröffentlichte deutsche Patentanmeldung DE 101 29 743 (Fahrzeugscheinwerfer) zeigt ein zweidimensionales Array aus einer Vielzahl von elektronischen Lichtquellen, die dafür eingerichtet sind, eine Vielzahl von zueinander parallelen Lichtbündeln zu emittieren, einer Sammellinse, die im Abstand ihrer Brennweite im wesentlichen parallel zu der Fläche des Arrays angeordnet ist, um das Licht von dem Array zu empfangen, und einer Ansteuerelektronik für die Lichtquellen, die dafür eingerichtet ist, die Lichtquellen einzeln oder gruppenweiseselektiv leuchten zu lassen. Die Patentanmeldung sieht de weiteren vor, Lichtquellen, welche Licht im sichtbaren Wellenlängenbereich ausstrahlen mit solchen Lichtquellen welche Licht im nichtsichtbaren Wellenlängenbereich emittieren zu kombinieren. Durch die aufgezeigte Vorrichtung kann die Leuchtcharakteristik des Scheinwerfers allein mit Hilfe der Ansteuerelektronik an veränderliche Fahrbetriebs- oder Umgebungsbedingungen angepasst werden. Es sind so auch keinerlei mechanisch bewegliche Teile notwendig, wobei jedoch allen Lichtquellen eine gemeinsame, die Abstrahlcharakteristik des Scheinwerfers bestimmende, Optik zugeordnet ist.

Aufgabe der Erfindung ist es ein System bestehend aus einer Beleuchtungseinrichtung sowie einem Kommunikationssystem und/oder einem System zur Abstandmessung und ein zum Betrieb eines solchen Systems geeignetes Verfahren zu finden, welche es ermöglicht den einzelnen Lichtquellen individuelle Abstrahlcharakteristiken zuzuordnen.

Die Erfindung wird durch ein System bestehend aus einer breitbandigen Beleuchtungseinrichtung sowie einem Kommunikationssystem und/oder einem System zur Abstanbmessung und ein zum Betrieb eines solchen Systems geeigneten Verfahren mit den Merkmalen der Patentansprüche 1 und 12 gelöst.

Die Erfindung bezieht sich auf ein System bestehend aus einer breitbandigen Beleuchtungseinrichtung sowie einem Kommunikationssystem und/oder einem System zur Abstandmessung insbesondere zur Verwendung in einem Kraftfahrzeug, welche durch ein Vielzahl von Halbleiterlichtquellen gebildet wird. Hierbei strahlt ein Teil der Halbleiterlichtquellen Licht im sichtbaren Wellenlängenbereich aus und ein anderer Teil der Halbleiterlichtquellen Licht im nichtsichtbaren Wellenlängenbereich. In besonders erfinderischer Weise werden nun wenigstens einige der Halbleiterlichtquellen einzeln oder in Gruppen mit Optiken zur Erzeugung einer individuellen Abstrahlungscharakteristik versehen und die Beleuchtungseinrichtung wird mit dem Kommunikationssystem und/oder dem System zur Abstandmessung als Teil dessen Sendeeinrichtung in Verbindung gebracht. Hierdurch wird es in vorteilhafter Weise möglich, dass von unterschiedlichen Lichtquellen, welche vorzugsweise Lumineszenzdioden oder Halbleiterlaser sind, innerhalb einer einzigen Beleuchtungseinrichtung Licht mit unterschiedlicher Abstrahlungscharakteristik ausgesandt wird.

So ist es beispielsweise denkbar, mittels der erfindungsgemäßen Beleuchtungseinrichtung einen kombinierten Nahbereichs- und Fernlichtscheinwerfer zu erzeugen, indem einzelne Lichtquellen, welche sichtbares Licht emittieren, individuell mit unterschiedlichen Optiken versehen werden, so dass je nach Aktivierung der Lichtquellen einzeln oder in Gruppen, der Bereich vor dem Kraftfahrzeug unterschiedlich ausgeleuchtet wird. Es ist somit nicht mehr notwendig für den Nah- und den Fernlichtbereich separate Scheinwerfer, oder zwei bzw. zweigeteilte Glühbirnen (mit unterschiedlich angeordneten Glühfäden) innerhalb eines Scheinwerfers zu verwenden. Es kann somit mit einem einzigen Beleuchtungsmodul, auf welchem die mit den Optiken versehenen Halbleiterlichtquellen aufgebracht sind unterschiedliche Ausleuchtcharakteristik erzielt werden. Hierzu ist es nur notwendig die Beleuchtungseinrichtung mit einer elektronischen Steuereinheit zu versehen, welche es ermöglicht die einzelnen Halbleiterlichtquellen einzeln oder in Gruppen individuell anzusteuern. In besonders vorteilhafter Weise ermöglicht es diese Ansteuerung desweiteren, die einzelnen Halbleiterlichtquellen in ihrer Strahlungsintensität zu beeinflussen, so dass die gesamte Strahlungscharakteristik der erfinderischen Beleuchtungseinrichtung an unterschiedliche Beleuchtungsanforderungen, insbesondere bzgl. des Beleuchtungsbereichs als auch der Beleuchtungsintensität, angepasst werden kann.

Durch die Kombination von Halbleiterlichtquellen, welche sichtbares Licht aussenden, mit solchen, welche nicht sichtbares Licht aussenden wird es möglich einen kompakten und gegen Erschütterungen robusten breitbandigen Beleuchter zu schaffen. Eine solche breitbandige Beleuchtungseinrichtung eignet sich in vorzüglicher Weise zur Verwendung in einem Kraftfahrzeug, da mittels eines einzigen Scheinwerfers, sowohl der Nah- als auch der Fernbereich vor dem Fahrzeug mit sichtbarem Licht ausgeleuchtet werde kann, dieser zugleich aber auch als Lichtquelle im Rahmen eines Systems zur Nachtsichtverbesserung verwendet werden kann. Hierbei eignen sich vor allem Halbleitleitlichtquellen, welche Licht im infraroten oder ultravioletten Wellenlängenbereich ausstrahlen.
Es ist nun in gewinnbringender Weise möglich je nach Einsatzbereich bei der Gestaltung der breitbandigen Beleuchtungseinrichtung das Verhältnis der Halbleiterlichtquellen, welche sichtbares Licht ausstrahlen, zu denen, welches nicht-sichtbares Licht ausstrahlen, unterschiedlich zu wählen. Da beispielsweise Infrarot-Halbleiterlaser für das menschliche Auge nicht sichtbar sind, können diese insbesondere im Pulsbetrieb mit wesentlich höheren Strahlungsdichten arbeiten. Deshalb ist es denkbar, das die Anzahl der in der erfindungsgemäßen Beleuchtungseinrichtung notwendigen Infrarot-Lichtquellen, wesentlich geringer gewählt werden könnte, als die Anzahl der sichtbares Licht ausstrahlenden Lichtquellen, mittels welcher beispielsweise der Fernlichtbereich zufriedenstellend ausgeleuchtet werden sollte.

Andererseits ist jedoch auch eine Verwendung der erfindungsgemäßen Beleuchtungseinrichtung als spezieller Infrarot-Scheinwerfer denkbar, insbesondere zur Verwendung im Rahmen eines Kraftfahrzeugsystems zur Nachtsichtverbesserung. Bei der Verwendung von Infrarot-Scheinwerfern an der Vorderseite eines Kraftfahrzeugs sind jedoch die verkehrsrechtlichen Bestimmung zu beachten, welche besagen, dass kein, sichtbares rotes Licht ausstrahlende Lichtquelle an der Front eines Fahrzeugs aufleuchten darf. Sendet der Scheinwerfer nun Licht im nah-infraroten Bereich aus, so besteht die Gefahr, dass dieses noch von einigen Personen als schwacher roter Schimmer wahrgenommen wird. Um dies zu vermeiden kann, deshalb in vorteilhafter Weise eine geringere Anzahl von Halbleiterlichtquellen der erfindungsgemäßen Beleuchtungseinrichtung sichtbares, insbesondere weißes Licht ausstrahlen, welches dazudient den Rotlicht-Schimmer zu überdecken. Auch mag es im Hinblick auf die Augensicherheit vorteilhaft sein, durch eine gewisse Zahl von Halbleiterlichtquellen sichtbares Licht mit einer solchen Intensität auszustrahlen, dass kein menschlicher Beobachter längere Zeit direkt in den Scheinwerfer blickt.

Um bei der breitbandigen Beleuchtungseinrichtung, sowohl im sichtbaren als auch im nicht-sichtbaren Wellenlängenbereich Licht in ausreichender Intensität und Strahlungsdichte ausstrahlen zu können, eignen sich in besonders vorteilhafter Weise flache Optiken, deren Lichteintrittsöffnung eine längliche, im wesentlichen rechteckige Form aufweisen. Solche flache Optiken benötigen in besonderer Weise auch bei großer Anzahl von Einzeloptiken nur einen relativ geringen Bauraum und ermöglichen eine optimale Flächendichte an Lichtquellen. In besonderer Weise eignen sich Optiken, welche senkrecht zur Lichteintrittsfläche einen Zentralbereich aufweisen, dessen Projektion in eine zweidimensionale Ebene einem zylindrischen 2-dimensionalen Kartoval entspricht. Wobei sich in besonders vorteilhafter Weise dieser Zentralbereich mit einem parabolischen Reflektor kombiniert wird. Solcherart gestaltete Optiken sind beispielsweise in der nachveröffentlichten deutschen Patentanmeldung DE 102 49 819 (Asymmetrischer Scheinwerfer) beschrieben.

Der vorhandene Bauraum bei der Nebeneinanderordnung der Halbleiterlichtquellen läßt sich weiter optimieren, wenn wenigstens einigen der einzelnen Optiken mehrere Halbleiterlichtquellen zugeordnet werden. Das von solchermaßen einer gemeinsamen Optik zugeordneten individuellen Halbleiterlichtquellen ausgestrahlte Licht weist dann zwar individuell unterschiedliche Strahlungscharakteristik auf, da jede Lichtquelle in Bezug auf den Brennpunkt der Optik an anderer Stelle angeordnet ist. Solchermaßen erzeugte unterschiedliche Strahlungscharakteristiken sind aber für viele denkbare Anwendungen der erfinderischen Beleuchtungseinrichtung von Vorteil. So ist es im allgemeine wünschenswert, dass der mit sichtbarem Licht arbeitende Nahbereichsscheinwerfen zur Blendverhinderung hauptsächlich Licht im Bereich der eigenen vorausliegenden Fahrbahn aussendet, während gleichzeitig der der Nachtsichtverbesserung dienende nicht-sichtbare Lichtanteil des Scheinwerferlichts auch Bereiche auf der Gegenfahrbahn oder am Straßenrand ausleuchtet.

Werden die einzelnen Halbleiterlichtquellen durch eine Elektronik angesteuert, welche es erlaubt die Lichtquellen einzeln oder in Gruppen zu betreiben und insbesondere auch in Bezug auf deren Leuchtintensität zu beeinflussen, ist es in vorteilhafter Weise auch denkbar die erfindungsgemäße Beleuchtungseinrichtung auch mit einem Kommunikationssystem oder einem System zur Abstandsmessung als Teil dessen Sendeeinrichtung in Verbindung zu bringen. Im Zusammenspiel mit einem Kommunikationssystem können Teile der Halbleiterlichtquellen, insbesondere diejenigen, welche Licht im nicht-sichtbaren Wellenlängenbereich ausstrahlen, auf Basis eines Kommunikationssignals in ihrer Strahlintensität moduliert werden. Mittels einer solchen gewinnbringenden Ausgestaltung der breitbandigen Beleuchtungseinrichtung wird es möglich, unter Zuhilfenahme der Fahrzeugbeleuchtung eine Fahrzeug-Fahrzeug-Kommunikation zu etablieren.

Desgleichen ist es denkbar, im Zusammenwirken mit einem System zur Abstandsmessung, mittels der erfindungsgemäßen Beleuchtungseinrichtung durch gepulste Aktivierung zumindest eines Teils der Halbleiterlichtquellen, die Messpulse auszusenden, welche sodann nach Reflektion an Objekten durch die mit diesen Messpulsen synchronisierte Empfangseinrichtung des Abstandmesssystems empfangen werden. Auf diese Weise läßt sich nicht nur der Abstand zu vorfahrenden Fahrzeugen bestimmen, sondern beispielsweise auch bei dichtem Nebel oder Regen die aktuelle Sichtweite schätzen. Die erfinderische Beleuchtungseinrichtung kann dabei im Rahmen ihrer Verwendung als Frontscheinwerfer eines Kraftfahrzeugs, beispielsweise bei der Abstandsregelung zu vorausfahrenden Fahrzeugen genutzt werden. Des weiteren ist es denkbar, die Beleuchtungseinrichtung als Leuchte an der Rückseite des Fahrzeugs zu verwenden und diese zusätzlich, beispielsweise in Kombination mit einer geregelten Nebelschlussleuchte, zur Messung des Abstandes nachfolgender Fahrzeuge zu nutzen.

## Patentansprüche

1. System bestehend aus einer Breitbandigen Beleuchtungseinrichtung sowie einem Kommunikationssystem und/oder System zur Abstandsmessung, insbesondere zur Verwendung in einem Kraftfahrzeug,
welche durch ein Vielzahl von Halbleiterlichtquellen gebildet wird,
wobei ein Teil der Halbleiterlichtquellen Licht im sichtbaren Wellenlängenbereich ausstrahlt,
und ein anderer Teil der Halbleiterlichtquellen Licht im nicht-sichtbaren Wellenlängenbereich ausstrahlt
**dadurch gekennzeichnet,**
**dass** wenigstens einigen der Halbleiterlichtquellen einzeln Optiken zur Erzeugung einer individuellen Abstrahlungscharakteristik zugeordnet werden,
und **dass** die den einzelnen Halbleiterlichtquellen zugeordneten Optiken zumindest teilweise unterschiedliche Abstrahlungscharakteristiken aufweisen,
und **dass** die Beleuchtungseinrichtung mit dem Kommunikationssystem und/oder dem System zur Abstandsmessung so in Verbindung gebracht wird, dass es Teil dessen Sendeeinrichtung bildet.

2. System nach Anspruch 1,
**dadurch gekennzeichnet,**
**dass** zumindest ein Teil der Halbleiterlichtquellen Lumineszenzdioden oder Halbleiterlaser sind.

3. System nach einem der Ansprüche 1 oder 2,
**dadurch gekennzeichnet,**
**dass** die Licht im nicht-sichtbaren Wellenlängenbereich ausstrahlenden Halbleiterlichtquellen, Licht im infraroten oder ultravioletten Wellenlängenbereich ausstrahlen.

4. System nach einem der Ansprüche 1 bis 3,
**dadurch gekennzeichnet,**
**dass** die Mehrzahl der Halbleiterlichtquellen Licht im sichtbaren Wellenlängenbereich ausstrahlen.

5. System nach einem der Ansprüche 1 bis 3,
**dadurch gekennzeichnet,**
**dass** die Mehrzahl der Halbleiterlichtquellen Licht im nichtsichtbaren Wellenlängenbereich ausstrahlen.

6. System nach einem der vorhergehenden Ansprüche,
**dadurch gekennzeichnet,**
**dass** die Lichteintrittsöffnung der Optiken eine längliche, im wesentlichen rechteckige Form aufweisen.

7. System nach Anspruch 6,
**dadurch gekennzeichnet,**
**dass** die Optiken senkrecht zur Lichteintrittsfläche einen Zentralbereich aufweisen, dessen Projektion in eine zweidimensionale Ebene einem zylindrischen 2-dimensionalen Kartovals entspricht,
und **dass** dieser Zentralbereich mit einem parabolischen Reflektor kombiniert wird.

8. System nach einem der vorhergehenden Ansprüche,
**dadurch gekennzeichnet,**
**dass** einzelnen Optiken mehrere Halbleiterlichtquellen zugeordnet sind.

9. System nach Anspruch 8
**dadurch gekennzeichnet,**
**dass** sich das Abstrahlverhalten der Beleuchtungseinrichtung für sichtbares Licht von dem für nicht-sichtbares Licht unterscheidet.

10. System nach einem der vorhergehenden Ansprüche,
**dadurch gekennzeichnet,**
**dass** Mittel vorgesehen sind, um die Halbleiterlichtquellen einzeln oder in Gruppen individuell anzusteuern.

11. System nach Anspruch 10,
**dadurch gekennzeichnet,**
**dass** Mittel vorgesehen sind um die Halbleiterlichtquellen einzeln oder in Gruppen mit unterschiedlicher Intensität anzusteuern.

12. Verfahren zum Betrieb eines Systems nach einem der Ansprüche 1 bis 11, wobei die breitbandige Beleuchtungseinrichtung durch ein Feld von einzelnen Optiken gebildet wird, denen jeweils wenigstens eine Halbleiterlichtquelle, insbesondere eine Lumineszenzdiode zugeordnet ist,
wobei mittels einem Teil der Halbleiterlichtquellen Licht im sichtbaren Wellenlängenbereich ausstrahlt wird,
und wobei durch einen anderen Teil der Halbleiterlichtquellen Licht im nicht-sichtbaren Wellenlängenbereich ausstrahlt wird,
**dadurch gekennzeichnet,**
**dass** die Halbleiterlichtquellen einzeln oder in Gruppen individuell, als Teil der Sendeeinrichtung eines Kommunikationssystems und/oder eines Systems zu Abstandsmessung angesteuert werden.

13. Verfahren zum Betrieb eines Systems nach Anspruch 12, **dadurch gekennzeichnet, dass** die Halbleiterlichtquellen einzeln oder in Gruppen mit unterschiedlicher Intensität angesteuert werden können.

14. Verfahren zum Betrieb eines Systems nach einem der Ansprüche 12 oder 13,
**dadurch gekennzeichnet,**
**dass** die Lichtstrahlung der Halbleiterlichtquellen, insbesondere derjenigen, welche Licht im nicht-sichtbaren Wellenlängenbereich ausstrahlen, gepulst oder mit Kommunikationssignalen moduliert werden können.

15. Verwendung eines Systems nach einem der Ansprüche 1-11, in einem System zur Nachtsichtverbesserung, welches auf Basis aktiver infraroter oder ultravioletter Umgebungsbeleuchtung arbeitet.

## Claims

1. System comprising a wideband illumination device and a communication system and/or system for distance measurement, in particular for use in a motor vehicle,
which is formed by a multiplicity of semiconductor light sources,
one portion of the semiconductor light sources emitting light in the visible wavelength region,
and another portion of the semiconductor light sources emitting light in the non-visible wavelength region,
**characterized**
**in that** at least some of the semiconductor light sources are individually assigned optical arrangements for generating an individual emission characteristic,
**in that** the optical arrangements assigned to the individual semiconductor light sources have at least in part different emission characteristics, and **in that** the illumination device is connected to the communication system and/or the system for distance measurement in such a way that it forms part of the transmission device thereof.

2. System according to Claim 1,
**characterized**
**in that** at least one portion of the semiconductor light sources are light-emitting diodes or semiconductor lasers.

3. System according to either of Claims 1 and 2,
**characterized**
**in that** the semiconductor light sources which emit light in the non-visible wavelength region emit light in the infrared or ultraviolet wavelength region.

4. System according to one of Claims 1 to 3,
**characterized**
**in that** the plurality of semiconductor light sources emit light in the visible wavelength region.

5. System according to one of Claims 1 to 3,
**characterized**
**in that** the plurality of semiconductor light sources emit light in the non-visible wavelength region.

6. System according to one of the preceding claims,
**characterized**
**in that** the light entry opening of the optical arrangements have an elongate, essentially rectangular form.

7. System according to Claim 6,
**characterized**
**in that** the optical arrangements have, perpendicular to the light entry area, a central region whose projection into a two-dimensional plane corresponds to a cylindrical two-dimensional Cartesian oval,
and **in that** said central region is combined with a parabolic reflector.

8. System according to one of the preceding claims,
**characterized**
**in that** a plurality of semiconductor light sources are assigned to individual optical arrangements.

9. System according to Claim 8,
**characterized**
**in that** the emission behaviour of the illumination device for visible light differs from that for non-visible light.

10. System according to one of the preceding claims,
**characterized**
**in that** means are provided in order to drive the semiconductor light sources individually or in groups individually.

11. System according to Claim 10,
**characterized**
**in that** means are provided in order to drive the semiconductor light sources individually or in groups with a different intensity.

12. Method for operating a system according to one of Claims 1 to 11,
the wideband illumination device being formed by an array of individual optical arrangements that are in each case assigned at least one semiconductor light source, in particular a light-emitting diode,
light in the visible wavelength region being emitted by means of one portion of the semiconductor light sources, and
light in the non-visible wavelength region being emitted by another portion of the semiconductor light sources,
**characterized**
**in that** the semiconductor light sources are driven individually or in groups individually as part of the transmission device of a communication system and/or of a system for distance measurement.

13. Method for operating a system according to Claim 12,
**characterized**
**in that** the semiconductor light sources can be driven individually or in groups with a different intensity.

14. Method for operating a system according to either of Claims 12 or 13,
**characterized**
**in that** the light radiation of the semiconductor light sources, in particular of those which emit light in the non-visible wavelength region, can be pulsed or modulated with communication signals.

15. Use of a system according to one of Claims 1-11, in a system for improving night visibility which operates on the basis of active infrared or ultraviolet ambient illumination.

## Revendications

1. Système constitué d'un dispositif d'éclairage à large bande ainsi que d'un système de communication et/ou d'un système de mesure de la distance, notamment destiné à être utilisé dans un véhicule automobile,
du type formé par une pluralité de sources lumineuses à semiconducteurs,
une partie des sources lumineuses à semiconducteurs émettant de la lumière dans le spectre visible,
et une autre partie des sources lumineuses à semiconducteurs émettant de la lumière dans le spectre non visible,
**caractérisé en ce**
**que** différentes optiques destinées à produire une caractéristique de rayonnement individuelle sont associées à au moins quelques-unes des sources lumineuses à semiconducteurs,
**que** les optiques associées aux différentes sources lumineuses à semiconducteurs comportent du moins en partie des caractéristiques de rayonnement différentes,
et **que** le dispositif d'éclairage est relié au système de communication et/ou au système de mesure de la distance de manière à ce qu'il forme partie de son système d'émission.

2. Système selon la revendication 1,
**caractérisé en ce**
**qu'**une partie au moins des sources lumineuses à semiconducteurs sont des diodes luminescentes ou des lasers à semiconducteurs.

3. Système selon l'une quelconque des revendications 1 ou 2,
**caractérisé en ce**
**que** les sources lumineuses à semiconducteurs émettant de la lumière dans le spectre non visible émettent de la lumière dans le spectre infrarouge ou ultraviolet.

4. Système selon l'une quelconque des revendications 1 à 3,
**caractérisé en ce**
**que** la plupart des sources lumineuses à semiconducteurs émettent de la lumière dans le spectre visible.

5. Système selon l'une quelconque des revendications 1 à 3,
**caractérisé en ce**
**que** la plupart des sources lumineuses à semiconducteurs émettent de la lumière dans le spectre non visible.

6. Système selon l'une quelconque des revendications précédentes,
**caractérisé en ce**
**que** l'orifice d'entrée de la lumière des optiques est de forme allongée, sensiblement rectangulaire.

7. Système selon la revendication 6,
**caractérisé en ce**
**que** les optiques comportent une zone centrale perpendiculaire à la surface d'entrée de la lumière et dont la projection sur un plan bidimensionnel correspond à une ellipse cartésienne bidimensionnelle cylindrique,
et **que** cette zone centrale est combinée à un réflecteur parabolique.

8. Système selon l'une quelconque des revendications précédentes,
**caractérisé en ce**
**que** plusieurs sources lumineuses à semiconducteurs sont associées à différentes optiques.

9. Système selon la revendication 8,
**caractérisé en ce**
**que** le comportement en rayonnement du dispositif d'éclairage pour la lumière visible diffère de celui pour la lumière non visible.

10. Système selon l'une quelconque des revendications précédentes,
**caractérisé en ce**
**que** sont prévus des moyens pour commander individuellement les sources lumineuses à semiconducteurs, une par une ou en groupes.

11. Système selon la revendication 10,
**caractérisé en ce**
**que** sont prévus des moyens pour commander les sources lumineuses à semiconducteurs une par une ou en groupes avec différentes intensités.

12. Procédé de mise en fonctionnement d'un système selon l'une quelconque des revendications 1 à 11, où le dispositif d'éclairage à large bande est formé par un champ de différentes optiques à chacune desquelles est associée au moins une source lumineuse à semiconducteurs, notamment une diode luminescente,
où de la lumière est émise dans le spectre visible moyennant une partie des sources lumineuses à semiconducteurs
et où de la lumière est émise dans le spectre non visible par une autre partie des sources lumineuses à semiconducteurs,
**caractérisé en ce**
**que** les sources lumineuses à semiconducteurs sont commandées individuellement, une par une ou en groupes, en tant que partie du dispositif d'émission d'un système de communication et/ou d'un système de mesure de la distance.

13. Procédé de mise en fonctionnement d'un système selon la revendication 12, **caractérisé en ce que** les sources lumineuses à semiconducteurs peuvent être commandées une par une ou en groupes avec différentes intensités.

14. Procédé de mise en fonctionnement d'un système selon la revendication 12 ou 13,
**caractérisé en ce**
**que** la radiation lumineuse des sources lumineuses à semiconducteurs, notamment de celles émettant de la lumière dans le spectre non visible, peut être pulsée ou modulée avec des signaux de communication.

15. Utilisation d'un système selon l'une quelconque des revendications 1 à 11, dans un système destiné à améliorer la vision nocturne et fonctionnant sur la base d'un éclairage ambiant actif infrarouge ou ultraviolet.
